# EUROPÄISCHE PATENTANMELDUNG

(11) **EP 1 944 544 A2**
(43) Veröffentlichungstag der Anmeldung: **16.07.2008**
(21) Anmeldenummer: 07022806.9
(22) Anmeldetag: 24.11.2007
(51) Int. Cl.: F23K 1/00

(54) **Kleinstückiger Brennstoff aus Braunkohle sowie Verfahren zu dessen Herstellung**

(30) Priorität: 12.01.2007 DE 102007002631
(71) Anmelder: RWE Power Aktiengesellschaft, 45128 Essen (DE)
(72) Erfinder: Erken, Manfred, 50129 Bergheim (DE); Lange, Raimund, 50226 Frechen (DE); Menge, Franz-Josef, 50259 Pulheim (DE); Müller. Klaus, 52399 Merzenich (DE); Schubert, Bernhard, 41540 Dormagen (DE)
(74) Vertreter: Polypatent

(57) **Zusammenfassung**

Die Erfindung betrifft einen kleinstückigen Brennstoff aus Braunkohle mit einer durchschnittlichen Korngröße von 2 - 20 mm. Der Brennstoff zeichnet sich insbesondere dadurch aus, dass er ausschließlich aus gewachsener Braunkohle besteht, wobei das Kornband ohne nachträgliche Agglomeration erhalten wurde. Die Erfindung betrifft weiterhin ein Verfahren zur Herstellung des Brennstoffs, bei welchem die grubenfeuchte Braunkohle (Rohbraunkohle) zerkleinert und getrocknet wird und wobei durch Klassierung einer Kornfraktion von 2 bis 20 mm getrennt wird.

Der so erhaltene Brennstoff ist eine kostengünstige Alternative zu den durch Agglomeration hergestellten kleinstückigen Brennstoffen für den Hausbrandbereich und den Industriebereich. Insbesondere wird mit dem erfindungsgemäßen Brennstoff ein optimales Verbrennungsergebnis erzielt.

## Beschreibung

Die Erfindung betrifft einen kleinstückigen Brennstoff aus Braunkohle mit einer durchschnittlichen Korngröße von 2 - 20 mm. Die Erfindung betrifft weiterhin ein Verfahren zur Herstellung eines solchen kleinstückigen Brennstoffs.

Kleinstückige Brennstoffe werden hauptsächlich zu Heizzwecken im Hausbrandbereich bei Kesselanlagen von weniger als 15 kW Leistung oder im Industriebereich bei Kesselanlagen mit zwischen 15 und 5.000 kW Leistung eingesetzt.

Für Kesselanlagen mit einer thermischen Leistung von mehr als 5.000 kW werden in der Regel Steinkohlen und Braunkohlen in Form von Staub verbrannt. Auch ist es bekannt, Braunkohle in Wirbelschichtkesseln zu verbrennen. Dort wird der Brennstoff in einer stationären oder expandierenden Wirbelschicht umgesetzt, wobei sich der Brennstoff in der Wirbelschicht wie ein Fluidum verhält. Der in der Wirbelschicht verbrannte Brennstoff besitzt in der Regel eine Korngröße von zwischen 0 und 2 mm. Insbesondere Braunkohlenstaub und Wirbelschichtbraunkohle kommen als Brennstoffe wegen der mit der Art der Feuerungsführung verbundenen hohen spezifischen Anlagekosten erst bei Kesselleistungen von größer als 5.000 kW zum Einsatz.

Kleinere Kesselanlagen mit einer Leistung von 15 bis 5.000 kW werden üblicherweise mit Öl, Gas, Steinkohle sowie Holzpellets und Hackschnitzeln aus biogenem Material befeuert. Aufgrund der hohen Kosten für Heizöl und Erdgas, nicht zuletzt auch aus Gründen einer ausgeglichenen CO₂-Bilanz, erfreuen sich Holzpellets und Hackschnitzel aus biogenem Material zunehmender Beliebtheit. Darüber hinaus werden im Hausbrand- und im Industriebereich Briketts aus Steinkohlen und Braunkohlen verfeuert.

Aus Gründen der Lagerung, des Umschlags und des Transports werden bei Feuerungsanlagen kleiner 5.000 kW durch Agglomeration stückiggemachte Brennstoffe, nämlich hauptsächlich Presslinge, eingesetzt. Zu nennen wären hier die bereits erwähnten Briketts als verhältnismäßig grobstückiger Brennstoff und Holz- oder Braunkohlenpellets als kleinstückiger Brennstoff. Insbesondere Pellets haben wegen ihrer Kleinstückigkeit den Vorzug, dass diese beispielsweise pneumatisch umgeschlagen werden können. Durch die Verdichtung des Materials beim Pressen erhält dieses hinreichende Stabilität gegen Abrieb und Bruch, was insbesondere bei Transport und Umschlag vorteilhaft ist. Ein starker Abrieb und damit ein hoher Staubanteil des Brennstoffs ist bei Feuerungsanlagen, in denen kleinstückiger Brennstoff verfeuert wird, naturgemäß nicht wünschenswert. Der Staubanteil führt zu unkontrollierten Verbrennungszuständen. Je nachdem, welches Material für die Herstellung von Pellets und Briketts verwendet wird, ist die Verwendung von Bindemitteln bei der Herstellung der Presslinge zur Erzielung hinreichender Bruch- und Abriebfestigkeit sowie gegebenenfalls auch zur Erzielung von einer hinreichenden Feuerstandsfestigkeit unerlässlich. Die Herstellung von Presslingen ist auch wegen des damit einhergehenden verhältnismäßig hohen Energieeinsatzes aufwendig.

Bei der Herstellung kleinstückiger Presslinge ist es oftmals erforderlich, feinkörniges Ausgangsmaterial in einen quasi pastösen Zustand zu überführen und die oftmals unter Einsatz von hohem Druck erzeugten Presslinge nach Fertigstellung zu trocknen, um die erwünschte Festigkeit zu erhalten.

Der Erfindung liegt daher die Aufgabe zugrunde, einen kleinstückigen rieselfähigen Brennstoff, insbesondere auf Braunkohlenbasis, bereitzustellen, der die zuvor erwähnten Anforderungen erfüllt sowie einfach und kostengünstig herstellbar ist.

Die Aufgabe wird erfindungsgemäß gelöst durch einen kleinstückigen Brennstoff aus Braunkohle mit einer durchschnittlichen Korngröße von 2 bis 20 mm, der sich dadurch auszeichnet, dass der Brennstoff ausschließlich aus gewachsener Braunkohle besteht, wobei das Kornband ohne nachträgliche Agglomeration erhalten wurde. Ein solcher kleinstückiger Brennstoff, nachstehend als Kornkohle bezeichnet, hat überraschenderweise insbesondere bei der Verbrennung in Kesselfeuerungen von kleiner 5.000 kW den Vorzug eines besonders gleichmäßigen Abbrands. Ursache hierfür ist, dass die Kornkohle eine verhältnismäßig hohe Porosität aufweist. Infolgedessen verbessert sich die Diffusion der gasförmigen Verbrennungsprodukte aus dem Brennstoff heraus. Ferner ist die für die Reaktion zur Verfügung stehende Brennstoffoberfläche größer. Im Fall der Kornkohle kommt es somit neben einem äußeren auch zu einem inneren Abbrand, was sich positiv auf das Verbrennungsverhalten sowie den Ausbrand des Brennstoffes auswirkt. Durch Versuche hat sich herausgestellt, dass der erfindungsgemäße Brennstoff eine feinpulvrige, nicht backende Asche hinterlässt, die besonders im Hinblick auf den Ascheaustrag und die Kesselreinigung vorteilhaft ist. Trotzdem ist die Kornkohle gemäß der Erfindung überraschend abriebfest und formbeständig. Im Gegensatz hierzu konnte bei Brennstoffpresslingen beobachtet werden, dass die Asche versintert.

Zweckmäßigerweise beträgt die durchschnittliche Korngröße des erfindungsgemäßen Brennstoffs zwischen 4 und 12 mm.

Die Kornkohle gemäß der Erfindung weist brikettähnliche Qualitätsparameter im Hinblick auf Heizwert, Aschegehalt, Zusammensetzung und Schwefelgehalt auf. Gleichzeitig lässt sich ein solcher Brennstoff gut dosieren. Je nach verwendetem Kesseltyp kann die Korngröße des Brennstoffs zwischen den erwähnten Grenzwerten variiert werden, um ein optimales Verbrennungsergebnis zu erzielen.

Der Brennstoff gemäß der Erfindung besitzt zweckmäßigerweise einen Wassergehalt zwischen etwa 10 bis 30 Masseprozent.

Die der Erfindung zugrundeliegende Aufgabe wird weiterhin gelöst durch Verfahren zur Herstellung des zuvor beschriebenen kleinstückigen Brennstoffs, bei welchem die grubenfeuchte Braunkohle (Rohbraunkohle) zerkleinert und getrocknet wird und wobei durch Klassierung eine Kornfraktion von 2 bis 20 mm, vorzugsweise von 4 bis 12 mm getrennt wird.

Vorzugsweise wird der Verfahrensschritt der Klassierung als Siebung aus einer Kornfraktion von 0 bis 30 mm durchgeführt.

Die Siebung kann nach der Trocknung der auf 0 bis 30 mm zerkleinerten Rohbraunkohle erfolgen.

Zweckmäßigerweise ist die Siebung einer Kühlung der aufbereiteten Braunkohle vorgeschaltet. Alternativ kann die Siebung einer Kühlung nachgeschaltet werden oder Siebung und Kühlung können in einem Verfahrensschritt durchgeführt werden.

Die Erfindung wird nachstehend anhand der in der Zeichnung dargestellten Verfahrensschemata erläutert werden.

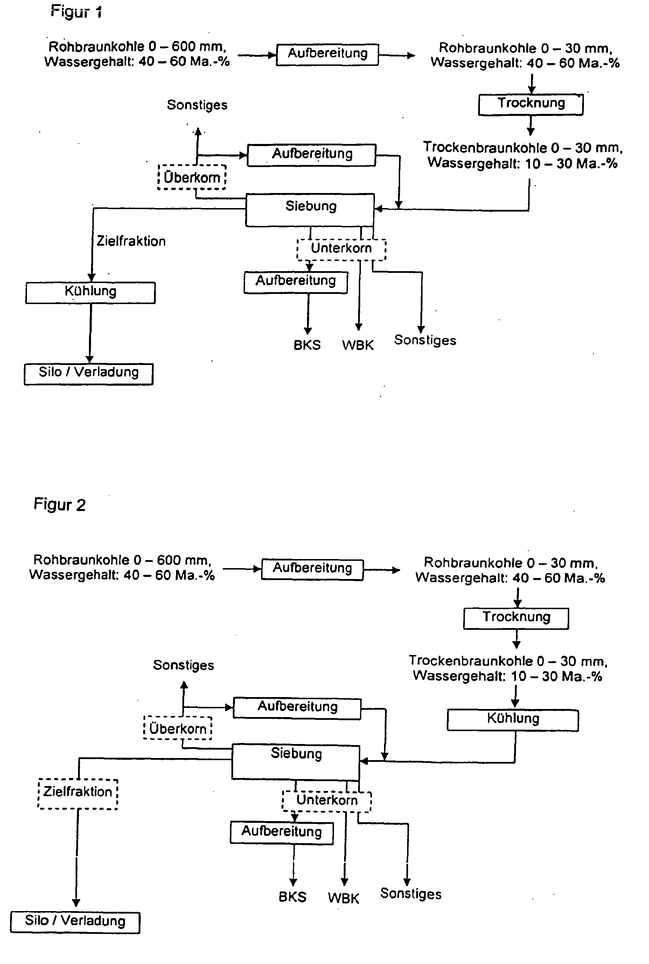

Figur 1 zeigt ein erstes Verfahrensschema zur Herstellung des Brennstoffs gemäß der Erfindung.

Figur 2 zeigt ein zweites Verfahrensschema zur Herstellung des Brennstoffs gemäß der Erfindung.

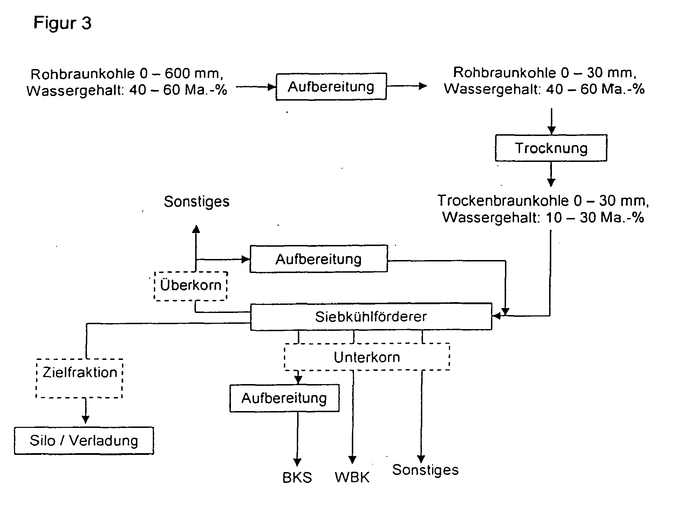

Figur 3 zeigt ein drittes Verfahrensschema zur Herstellung des Brennstoffs gemäß der Erfindung.

Wie aus den Verfahrensschemata zu entnehmen ist, wird die gewachsene, grubenfeuchte Braunkohle (Rohbraunkohle) mit einem Wassergehalt von 40 bis 60 Masseprozent und einer durchschnittlichen Körnung von 0 bis 600 mm zunächst aufbereitet, d.h. auf eine durchschnittliche Korngröße von 0 bis 30 mm zerkleinert. Anschließend wird die so zerkleinerte Braunkohle auf einen Wassergehalt von 10 bis 30 Masseprozent getrocknet. An die Trocknung schließt sich eine Siebklassierung an. Über entsprechende Siebe wird die Kornfraktion von 4 bis 12 mm (Zielfraktion) abgetrennt, gekühlt und für den Transport und die Anlieferung konfektioniert. Dabei ist vorgesehen, dass die so abgetrennte Kornkohle in Brennstoffbehälter gefüllt wird, wobei die gefüllten Behälter dem Abnehmer bereitgestellt werden.

Wie dem Verfahrensschema 1 zu entnehmen ist, wird das Überkorn aus der Siebklassierung nachzerkleinert. Das Unterkorn wird teilweise zu Braunkohlenstaub zerkleinert. Die Kornfraktion zwischen 0 und 2 mm wird als Wirbelschichtkohle abgetrennt.

Das in dem Verfahrensschema 2 dargestellte Herstellungsverfahren unterscheidet sich von dem vorher beschriebenen dadurch, dass die Kühlung vor der Siebklassierung erfolgt.

Das in Verfahrensschema 3 beschriebene Verfahren unterscheidet sich von den vorhergehenden dadurch, dass die Kühlung und die Siebung in einem Verfahrensschritt mit einem oder mehreren Siebkühlförderern durchgeführt wird.

Die Trocknung der Rohbraunkohle erfolgt vorzugsweise mit Röhrentrocknern, die mit Dampf beheizt werden. Alternativ kann die Trocknung auch mittels anderer bekannter Trocknungsverfahren durchgeführt werden. Die getrocknete Braunkohle wird in einer sich anschließenden Prozessstufe unter Verwendung bekannter Klassiermaschinen auf die gewünschte Körnung (beispielsweise 2 bis 6 mm, 4 bis 12 mm, 5 bis 20 mm) abgesiebt. Das etwaige Überkorn wird entweder einer Zerkleinerungsmaschine zugeführt und nachfolgend nochmals abgesiebt oder anderweitig verwendet. Das Unterkorn wird direkt als Produkt, beispielsweise als Wirbelschichtbraunkohle genutzt.

## Patentansprüche

1. Kleinstückiger Brennstoff aus Braunkohle mit einer durchschnittlichen Korngröße von 2 - 20 mm, **dadurch gekennzeichnet, dass** der Brennstoff ausschließlich aus gewachsener Braunkohle besteht, wobei das Kornband ohne nachträgliche Agglomeration erhalten wurde.

2. Kleinstückiger Brennstoff nach Anspruch 1, **dadurch gekennzeichnet, dass** die durchschnittliche Korngröße 4 bis 12 mm beträgt.

3. Kleinstückiger Brennstoff nach einem der Ansprüche 1 oder 2, **dadurch gekennzeichnet, dass** der Wassergehalt etwa 10 bis 30 Masseprozent beträgt.

4. Verfahren zur Herstellung eines kleinstückigen Brennstoffs nach einem der Ansprüche 1 bis 3, bei welchem die grubenfeuchte Braunkohle (Rohbraunkohle) zerkleinert und getrocknet wird und wobei durch Klassierung eine Kornfraktion von 2 bis 20 mm, vorzugsweise von 4 bis 12 mm getrennt wird.

5. Verfahren nach Anspruch 4, **dadurch gekennzeichnet, dass** der Verfahrensschritt der Klassierung als Siebung aus einer Kornfraktion von 0 bis 30 mm durchgeführt wird.

6. Verfahren nach Anspruch 4 oder 5, **dadurch gekennzeichnet, dass** die Siebung nach der Trocknung der auf 0 bis 30 mm zerkleinerten Rohbraunkohle erfolgt.

7. Verfahren nach einem der Ansprüche 5 bis 6, **dadurch gekennzeichnet, dass** die Siebung einer Kühlung der aufbereiteten Braunkohle vorgeschaltet ist.

8. Verfahren nach einem der Ansprüche 5 oder 6, **dadurch gekennzeichnet, dass** die Siebung einer Kühlung der aufbereiteten Braunkohle nachgeschaltet ist.

9. Verfahren nach einem der Ansprüche 4 bis 8, **dadurch gekennzeichnet, dass** die Kühlung der aufbereiteten Braunkohle während der Siebung erfolgt.
